# EUROPÄISCHE PATENTSCHRIFT

(11) **EP 0 585 811 B1**
(45) Veröffentlichungstag und Bekanntmachung des Hinweises auf die Patenterteilung: **27.11.1996**
(21) Anmeldenummer: 93113646.9
(22) Anmeldetag: 26.08.1993
(51) Int. Cl.: B60S 1/40

(54) **Federteil für Scheibenwischeranlage**
Resilient connector for a windscreen wiper system
Connecteur élastique pour système d'essuie-glaces

(30) Priorität: 01.09.1992 DE 4229127
(43) Veröffentlichungstag der Anmeldung: 09.03.1994
(73) Patentinhaber: ITT Automotive Europe GmbH, 60488 Frankfurt am Main (DE)
(72) Erfinder: Schael, Oliver, D-71706 Markgröningen (DE); Schmid, Eckhardt, D-74336 Brackenheim (DE)

(56) Entgegenhaltungen:
- EP-A- 0 141 186
- EP-A- 0 255 352
- EP-A- 0 319 161
- DE-A- 2 501 661
- DE-A- 2 829 437
- DE-A- 3 011 472
- DE-A- 4 039 833
- GB-A- 2 073 583

## Beschreibung

Die Erfindung betrifft ein Federteil für Scheibenwischeranlagen zum Verbinden einer einen Haken aufweisenden Wischerstange mit einem einen Gelenkbolzen aufweisenden Wischerblatt, mit einem Grundkörper, einer zum Wischerblatt hin offenen Rastaufnahme für den Gelenkbolzen sowie einem Kupplungsteil, das mit dem Haken betrieblich verbindbar ist (Federteil, der demjenigen nach der DE-A-2 829 437 gattungsgemäß ausgebildet und im Oberbegriff des Anspruchs 1 definiert ist).

Aus der DE-A-28 29 437 ist ein Federteil der eingangs genannten Art bekannt, das als Verbinder zwischen einem Wischerblatt und einem Wischarm dient. Hierbei muß das Federteil so ausgebildet und bemessen sein, daß eine betriebsgemäße Verbindung zwischen dem Wischerblatt und dem Wischarm immer gewährleistet ist. Eine weitere Besonderheit solcher Verbindungen besteht darin, daß beim herkömmlichen Querschnitt der Wischerstange, der 9 x 3 mm beträgt, eine leichte Verbindung der Wischerstange mit dem Wischerblatt ohne weiteres möglich ist. Die Achse des Wischerblattes ist hierbei identisch mit dem Zentrum des Stangenhakens. Bei neuem Querschnitt der Wischerstange (9 x 4 mm), bedingt durch höhere Kräfte, ist eine größere Auflagefläche erforderlich. Dies führt dazu, daß das Wischerblatt größere Maße aufweist. Darüberhinaus ist die Achse des Blattes nicht identisch mit dem Zentrum des Stangenhakens. Wird nun ein Adapter verwendet, der den "kleinen" Stangenquerschnitt mit dem "großen" Wischerblatt verbindet, dann ist dies nicht ohne weiteres möglich, da sonst die Stange am Bügel anstößt. Dies ergibt sich aus der Tatsache, daß die Rotationsachse des Blattes viel zu tief liegt. Ferner stößt die Stange am Bügel an, weil die S-förmigen Abbiegungen bei den 9 x 3 mm Stangen viel enger gestaltet sind.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Weitere zweckmäßige und vorteilhafte Ausgestaltungen der Erfindung gehen aus den Unteransprüchen hervor.

Eine zweckmäßige Weiterbildung der Erfindung sieht vor, daß die Vorsprünge mit Abstand zueinander angeordnet sind. Dabei ist es vorteilhaft, wenn die Höhe (h) der Vorsprünge dem Abstand (a) der Schenkel des Hakens voneinander entspricht. Durch diese Maßnahmen wird insbesondere erreicht, daß das Federteil in seiner Betriebslage mit der Wischerstange sowohl kraftals auch formschlüssig verbunden ist. Bezüglich der Herstellung des Federteils ist es zweckmäßig, wenn jeder Schenkel mehrere Vorsprünge aufweist. Durch die Maßnahmen des Anspruches 5 wird ein sattes Einbringen der Vorsprünge in den Haken erreicht. Um die Herstellung der betriebsgemäßen Verbindung zwischen dem Federteil und dem Haken zu vereinfachen, sieht eine weitere zweckmäßig Weiterbildung der Erfindung vor, daS die außenseitigen Vorsprünge und/oder die zum Kupplungsteil am nächsten liegenden Vorsprünge in ihrer Draufsicht dreieckförmig sind und sich zur Mitte der Vorsprünge hin verjüngen.

Ferner ist vorgesehen, daß die Innen- und/oder die Außenwand der Schenkel Ausnehmungen, Vertiefungen und/oder Verstärkungsrippen aufweisen. Dadurch ist es möglich, ein an sich festes Federteil auch dann herzustellen, wenn seine Wände relativ dünn sind.

Eine weitere und besonders zweckmäßige Weiterbildung der Erfindung sieht vor, daß das Kupplungsteil mit beiden Schenkeln verbunden ist. Durch diese Maßnahmen wird insbesondere die Festigkeit der Schenkel erhöht. Im Rahmen dieses Gedankens ist es vorteilhaft, wenn der Abstand des Kupplungsteils zum Grundkörper größer ist als die Dicke der Schenkel. Der Abstand wird hierbei zweckmäßigerweise nur geringfügig größer als die Dicke der Schenkel gewählt, um den angestrebten Formschluß zu erreichen.

Um das Einbringen des einen Schenkels des Hakens in das Federteil zu erleichtern, sieht eine weitere zweckmäßige und vorteilhafte Weiterbildung der Erfindung vor, daß zwischen dem Grundkörper und dem Kupplungsteil eine Führungswand angeformt ist, die zusammen mit dem Kupplungsteil eine Steckaufnahme für den Schenkel definiert. Hierbei ist zweckmäßig, wenn das Kupplungsteil in Form eines Hohlzylinders mit mindestens einer Abflachung ausgebildet ist.
Schließlich ist vorgesehen, daß der Außendurchmesser des Kupplungsteils auf den Abstand der Schenkel zueinander abgestimmt ist.

Ein Ausführungsbeispiel der Erfindung ist in der Zeichnung schematisch dargestellt und wird im folgenden näher erläutert. Es zeigen
- Fig. 1: ein Federteil in perspektivischer Seitenansicht,
- Fig. 2: eine Seitenansicht in Richung des Pfeiles II nach Fig. 1,
- Fig. 3: eine Draufsicht in Richtung des Pfeiles II nach Fig. 1,
- Fig. 4: eine Bodenansicht in Richtung des Pfeiles IV nach Fig. 1,
- Fig. 5: einen Schnitt entlang der Linie V-V nach Fig. 4.

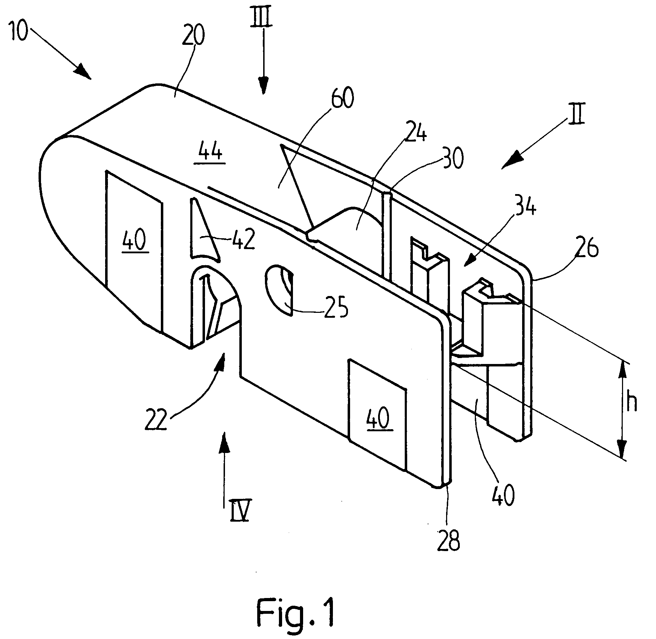

Die Figuren zeigen das Federteil 10 in unterschiedlichen Ansichten. Dabei handelt es sich um ein aus Kunststoff bestehendes und gespritztes Federteil 10 für Scheibenwischeranlagen zum Verbinden einer einen Haken aufweisenden Wischerstange mit einem einen Gelenkbolzen aufweisenden Wischerblatt. Das Federteil 10 besteht aus einem Grundkörper 20, einer zum Wischerblatt hin offenen Rastaufnahme 22 für den Gelenkbolzen 16 sowie einem Kupplungsteil 24. Das Kupplungsteil 24 ist mit dem Haken betrieblich verbindbar. Ferner ist den Figuren zu entnehmen, daß das Federteil 10 zwei am Grundkörper 20 angeformte, die Schmalseiten der Wischerstange flankierende und in Richtung der Gelenkbolzenachse 15 elastisch verschwenkbare Schenkel 26, 28 aufweist. Die Schenkel 26, 28 tragen an ihren Innenwänden angeformte und zwischen die Schenkel des Hakens einbringbare Vorsprünge 34, 36, die so bemessen sind, daß sie den größten Teil des Raumes zwischen den Schenkein des Hakens ausfüllen, was zur besseren und unverrückbaren Verbindung zwischen dem Federteil und dem Haken führt. Man erkennt, daß zwischen den Schenkeln 26, 28 das Kupplungsteil 24 mit Abstand zum Grundkörper 20 und oberhalb der Achse 15 angeordnet ist. Man erkennt auch, daß die Vorsprünge 34, 36 einander zugekehrt und mit Abstand zueinander angeordnet sind. Dabei ist vorgesehen, daß die Höhe h der Vorsprünge 34, 36 dem Abstand a der Schenkel des Hakens voneinander entspricht. Besonders die Fig. 1, 3 und 4 lassen erkennen, daß jeder Schenkel 26,28 mehrere Vorsprünge 134, 234, 334; 136, 236, 336 aufweist. Die Deckseiten und die Bodenseiten der Vorsprünge 34, 36 sind eben und verlaufen parallel zueinander, so daß sie auf den entsprechenden Seiten der Schenkel des Hakens satt aufliegen können.

Um das Einhängen bzw. Aushängen des Hakens zu erleichtern, ist vorgesehen, daß die außenseitigen Vorsprünge 234, 236 und die zum Kupplungsteil 24 am nächsten liegenden Vorsprünge 134, 136 in ihrer Draufsicht dreieckformig sind und sich zur Mitte der Vorsprünge 34, 36 hin verjüngen. Darüberhinaus lassen die Fig. erkennen, daß die Schenkel 26, 28 einen Teil der Seitenwände des Federteils 10 bilden und so bemessen sind, daß der kürzere Schenkel des Hakens innerhalb des Federteils 10 angeordnet ist. Die Innen- und die Außenwände der Schenkel 26, 28 besitzen Ausnehmungen 25, Vertiefungen 40 sowie nicht näher dargestellte Verstärkungsrippen, um zum einen die Festigkeit und zum anderen das Gewicht des Federteils 10 zu optimieren.

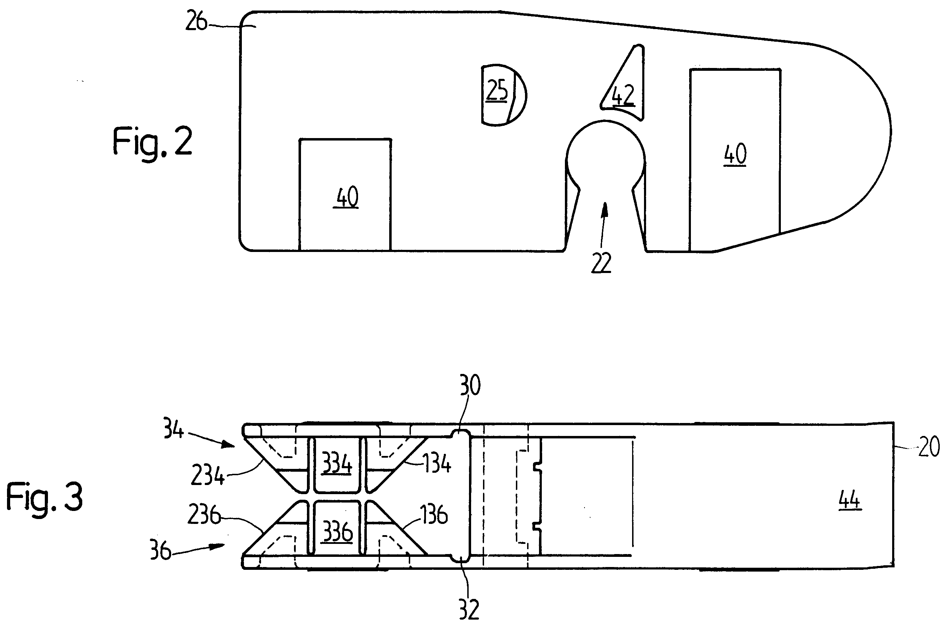

Das Kupplungsteil ist, wie insbesondere den Fig. 1 und 3 zu entnehmen ist, mit beiden Schenkeln 24, 26 fest verbunden. Dabei ist der Abstand des Kupplungsteils 24 zum Grundkörper 20 größer als die Dicke der Schenkel des Hakens.

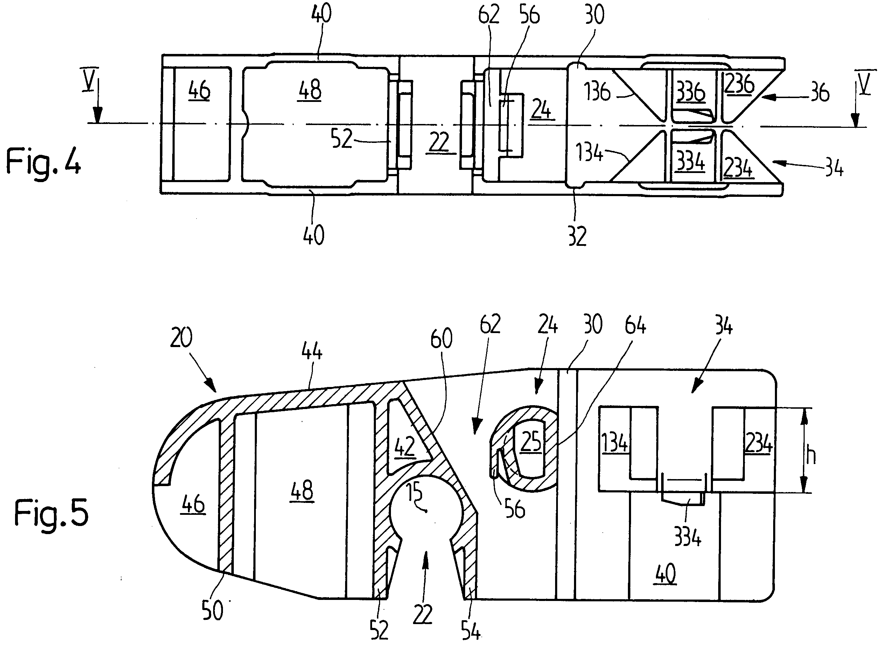

Die Fig. 1 und 5 lassen erkennen, daß zwischen dem Grundkörper 20 und dem Kupplungsteil 24 eine Führungswand 60 angeformt ist, die zusammen mit dem Kupplungsteil 24 eine Steckaufnahme 62 für den Schenkel des Hakens definiert. Darüberhinaus geht in diesem Zusammenhang aus Fig. 5 hervor, daß das Kupplungsteil 24 in Form eines Hohlzylinders mit mindestens einer Abflachung 64 zur besseren und leichteren Einführung des kürzeren Schenkels des Hakens ausgebildet ist. Hierbei ist der Außendurchmesser des Kupplungsteils 24 auf den Abstand der Schenkel des Hakens zueinander abgestimmt.

Die Deckseite 44 und die Seitenwände, in denen die Ausnehmungen 25, 42 und Erhebungen 40 ausgebildet sind, definieren Kammern 46, 48, die durch die Verstärkungswand 50 getrennt sind.

Die Besonderheit der Einlaßöffnung, die durch Schenkel 52, 54 flankiert ist, besteht darin, daß ihr Innendurchmesser auf den Außendurchmesser des Gelenkbolzens abgestimmt ist und daß sie unterhalb des Kupplungsteils 24 angeordnet ist. Das Kupplungsteil 24, das eine Abflachung 64 und eine Feder 56 aufweist, ist in Form eines Hohlzylinders mit einer Durchführung 25 ausgebildet. Zwischen dem Kupplungsteil 24 und der Außenseite der Rastaufnahme 22, die von einer Führungswand 60 abgedeckt ist, ist eine Steckaufnahme 62 für den Schenkel des Hakens vorgesehen. Schließlich ist zu erkennen, daß in den Innenwänden der Schenkel 26, 28 vertikal verlaufende Nuten 30, 32 ausgebildet sind, die die Schwenkbarkeit der Schenkel erleichtern und definieren.

Die Montage des Federteils 10 erfolgt beispielsweise wie nachfolgend beschrieben.

Das Federteil 10 wird wie üblich auf das Wischerblatt gesetzt und mit dem Gelenkbolzen verrastet. Daraufhin wird die Wischerstange schräg (ca. 60°) auf das hintere Teil des Federteils 10 gedrückt. Dabei biegen sich die beiden Schenkel 26, 28 nach außen, bis die Wischerstange das Kupplungsteil 24 erreicht hat. Nun wird die Wischerstange entlang ihrer Achse gezogen, bis der Haken 12 um das Kupplungsteil 24 liegt. Schließlich wird die Wischerstange um das Kupplungsteil 24 gedreht, bis die beiden Schenkel 26, 28 einrasten.

## Patentansprüche

1. Federteil (10) für Scheibenwischeranlagen zum Verbinden einer einen Haken aufweisenden Wischerstange mit einem einen Gelenkbolzen aufweisenden Wischerblatt, mit einem Grundkörper (20), einer zum Wischerblatt hin offenen Rastaufnahme (22) für den Gelenkbolzen sowie einem Kupplungsteil (24), das mit dem Haken betrieblich verbindbar ist, dadurch gekennzeichnet, daß an dem Grundkörper (20) zusätzlich zu dem Kupplungsteil (24) zwei in Richtung der Gelenkbolzenachse elastisch verschwenkbare Schenkel (26, 28) mit einander zugekehrten Vorsprüngen (34, 36) derart angeordnet sind, daß nachdem der Haken unter vorübergehendem Auslenken der Schenkel (26, 28) mit dem Kupplungsteil (24) verbunden und gegenüber dem Federteil (10) in seine Betriebsstellung gebracht wurde, die Vorsprünge (34, 36) zwischen die Schenkel des Hakens einrasten.

2. Federteil nach Anspruch 1,
dadurch gekennzeichnet,
daß die Vorsprünge (34, 36) mit Abstand zueinander angeordnet sind,

3. Federteil nach Anspruch 1 oder 2,
dadurch gekennzeichnet,
daS die Höhe (h) der Vorsprünge (34, 36) dem Abstand (a) der Schenkel des Hakens voneinander entspricht.

4. Federteil nach einem der Ansprüche 1 bis 3,
dadurch gekennzeichnet,
daß jeder verschwenkbare Schenkel (26, 28) mehrere Vorsprünge (134, 234, 334; 136, 236, 336) aufweist.

5. Federteil nach einem der Ansprüche 1 bis 4,
dadurch gekennzeichnet,
daß die Deckseiten und die Bodenseiten der Vorsprünge (34, 36) eben sind und parallel zueinander verlaufen.

6. Federteil nach einem der Ansprüche 1 bis 5,
dadurch gekennzeichnet,
daß die außenseitigen Vorsprünge (234, 236) und/oder die zum Kupplungsteil (24) am nächsten liegenden Vorsprünge (134, 136) in ihrer Draufsicht dreieckförmig sind und sich zur Mitte der Vorsprünge (134, 136) hin verjüngen.

7. Federteil nach einem der Ansprüche 1 bis 6,
dadurch gekennzeichnet,
daß die verschwenkbaren Schenkel (26, 28) einen Teil der Seitenwände des Federteils (10) bilden und so bemessen sind, daß der kürzere Schenkel des Hakens innerhalb des Federteils (10) angeordnet ist.

8. Federteil nach einem der Ansprüche 1 bis 7,
dadurch gekennzeichnet,
daß die Innen- und/oder die Außenwand der verschwenkbaren Schenkel (26, 28) Ausnehmungen (25), Vertiefungen und/oder Verstärkungsrippen aufweisen.

9. Federteil nach einem der Ansprüche 1 bis 8,
dadurch gekennzeichnet,
daß das Kupplungsteil (24) mit beiden verschwenkbaren Schenkeln (24, 26) verbunden ist.

10. Federteil nach einem der Ansprüche 1 bis 9,
dadurch gekennzeichnet,
daß der Abstand des Kupplungsteils (24) zum Grundkörper (20) größer ist als die Dicke der Schenkel des Hakens.

11. Federteil nach einem der Ansprüche 1 bis 10,
dadurch gekennzeichnet,
daß zwischen dem Grundkörper (20) und dem Kupplungsteil (24) eine Führungswand (60) angeformt ist, die zusammen mit dem Kupplungsteil (24) eine Steckaufnahme (62) für den kürzeren Schenkel des Hakens definiert.

12. Federteil nach einem der Ansprüche 1 bis 11,
dadurch gekennzeichnet,
daß das Kupplungsteil (24) in Form eines Hohlzylinders mit mindestens einer Abflachung (64) ausgebildet ist.

13. Federteil nach einem der Ansprüche 1 bis 12,
dadurch gekennzeichnet,
daß der Außendurchmesser des Kupplungsteils (24) auf den Abstand der Schenkel des Hakens zueinander abgestimmt ist.

## Claims

1. Resilient part (10) for windscreen wiper systems to connect a wiper rod including a hook to a wiper blade including a pivot pin, comprising a base member (20), a snap-type accommodating aperture (22) for the pivot pin which is open towards the wiper blade, and a coupling part (24) which is operatively connectable to the hook,
**characterized** in that two legs (26, 28), which are elastically swivellable in the direction of the pivot pin axis and have facing projections (34, 36), are arranged on the base member (20), in addition to the coupling part (24), in such a fashion that the projections (34, 36) will be locked between the legs of the hook after the hook has been connected to the coupling part (24), while the legs (26, 28) are temporarily deflected, and has adopted its operating position with respect to the resilient part (10).

2. Resilient part as claimed in claim 1,
**characterized** in that the projections (34, 36) are spaced from each other.

3. Resilient part as claimed in claim 1 or claim 2,
**characterized** in that the height (h) of the projections (34, 36) corresponds to the distance (a) of the legs of the hook from each other.

4. Resilient part as claimed in any one of claims 1 to 3,
**characterized** in that each swivellable leg (26, 28) has a plurality of projections (134, 234, 334; 136, 236, 336).

5. Resilient part as claimed in any one of claims 1 to 4,
**characterized** in that the top sides and the bottom sides of the projections (34, 36) are plane and extend in parallel to each other.

6. Resilient part as claimed in any one of claims 1 to 5,
**characterized** in that the external projections (234, 236) and/or the projections (134, 136) that are most proximate to the coupling part (24) are triangular in shape, when viewed from the top, and taper towards the middle of the projections (134, 136).

7. Resilient part as claimed in any one of claims 1 to 6,
**characterized** in that the swivellable legs (26, 28) form part of the lateral walls of the resilient part (10) and are dimensioned such that the shorter leg of the hook is arranged inside the resilient part (10).

8. Resilient part as claimed in any one of claims 1 to 7,
**characterized** in that the inside and/or outside walls of the swivellable legs (26, 28) have recesses (25), indentations and/or reinforcing ribs.

9. Resilient part as claimed in any one of claims 1 to 8,
**characterized** in that the coupling part (24) is connected to both swivellable legs (24, 26).

10. Resilient part as claimed in any one of claims 1 to 9,
**characterized** in that the distance between the coupling part (24) and the base member (20) exceeds the thickness of the legs of the hook.

11. Resilient part as claimed in any one of claims 1 to 10,
**characterized** in that a guide wall (60) is provided between the base member (20) and the coupling part (24) which, along with the coupling part (24), defines an insertion recess (62) for the shorter leg of the hook.

12. Resilient part as claimed in any one of claims 1 to 11,
**characterized** in that the coupling part (24) takes the shape of a hollow cylinder with at least one flattened portion (64).

13. Resilient part as claimed in any one of claims 1 to 12,
**characterized** in that the outside diameter of the coupling part (24) is conformed to the distance between the legs of the hook.

## Revendications

1. Pièce élastique (10), pour essuie-glace, servant à la jonction d'une tige d'essuie-glace, comportant un crochet, avec un balai d'essuie-glace comportant un axe d'articulation, la pièce élastique comprenant un corps de base (20), un logement à enclenchement (22), destine à l'axe d'articulation et ouvert vers le balai d'essuie-glace, et une partie d'accouplement (24) qui est agencée de façon à pouvoir être reliée fonctionnellement au crochet, caractérisée en ce qu'il est prévu, sur le corps de base (20) et en sus de la partie d'accouplement (24), deux branches (26, 28) qui sont agencées de façon à pouvoir faire l'objet d'une déflexion élastique suivant la direction de l'axe géométrique de l'axe d'articulation et comportent des parties en saillie (34, 36) se faisant face et qui sont disposées d'une façon telle qu'après que, moyennant une déflexion provisoire des branches (26, 28) vers l'extérieur, le crochet a été rendu solidaire de la partie d'accouplement (24) et a été amené à sa position opérationnelle vis-à-vis de la pièce élastique (10), les parties en saillie (34, 36) s'enclenchent entre les branches du crochet.

2. Pièce élastique selon la revendication 1, caractérisée en ce que les parties en saillie (34, 36) sont disposées à distance l'une de l'autre.

3. Pièce élastique selon la revendication 1 ou 2, caractérisé en ce que la hauteur (h) des parties en saillie (34, 36) est égale à la distance (a) séparant l'une de l'autre les branches du crochet.

4. Pièce élastique selon l'une des revendications 1 à 3, caractérisée en ce que chaque branche (26,28) agencée de façon à pouvoir faire l'objet d'une déflexion comporte plusieurs parties en saillie (134, 234, 334 ; 136, 236, 336).

5. Pièce élastique selon l'une des revendications 1 à 4, caractérisée en ce que les faces supérieures et les faces inférieures des parties en saillie (34, 36) sont planes et sont orientées parallèlement les unes aux autres.

6. Pièce élastique selon l'une des revendications 1 à 5, caractérisée en ce que les parties en saillie (234, 236) situées du côté extérieur et/ou les parties en saillie (134, 136) les plus proches de la partie d'accouplement (24) sont de forme triangulaire en vue de dessus et aient une largeur diminuant vers la zone centrale des parties en saillie (134, 136).

7. Pièce élastique selon l'une des revendications 1 à 6, caractérisée en ce que les branches (26, 28) agencées de façon à pouvoir faire l'objet d'une déflexion constituent une partie des parois latérales de la pièce élastique (10) et sont dimensionnées de façon que la branche la plus courte du crochet soit disposée à l'intérieur de la pièce élastique (10).

8. Pièce élastique selon l'une des revendications 1 à 7, caractérisée en ce que la paroi intérieure et/ou la paroi extérieure des branches (26, 28) agencées de façon à pouvoir faire l'objet d'une déflexion comportent des évidements (25), des parties en retrait et/ou des nervures de renfort.

9. Pièce élastique selon l'une des revendications 1 à 8, caractérisée en ce que la partie d'accouplement (24) est reliée aux deux branches (24, 26) agencées de façon à pouvoir faire l'objet d'une déflexion.

10. Pièce élastique selon l'une des revendications 1 à 9, caractérisée en ce que la distance séparant la partie d'accouplement (24) du corps de base (20) est supérieure à l'épaisseur des branches du crochet.

11. Pièce élastique selon l'une des revendications 1 à 10, caractérisée en ce qu'une paroi de guidage (60) est réalisée au formage entre le corps de base (20) et la partie d'accouplement (24), cette paroi de guidage définissant avec la partie d'accouplement (24) un logement à emboîtement (62) pour la branche la plus courte du crochet.

12. Pièce élastique selon l'une des revendications 1 à 11, caractérisée en ce que la partie d'accouplement (24) est réalisée sous la forme d'un cylindre creux comportant au moins un méplat (64).

13. Pièce élastique selon l'une des revendications 1 à 12, caractérisée en ce que le diamètre extérieur de la partie d'accouplement (24) est adapté à la distance séparant l'une de l'autre les branches du crochet.
